# EUROPÄISCHE PATENTSCHRIFT

(11) **EP 2 497 359 B1**
(45) Veröffentlichungstag und Bekanntmachung des Hinweises auf die Patenterteilung: **29.04.2015**
(21) Anmeldenummer: 12000506.1
(22) Anmeldetag: 26.01.2012
(51) Int. Cl.: A01K 5/00, B01F 7/24, B01F 7/00

(54) **Mischschnecke für Futtermischwagen**
Mixing screw for feed mixing vehicle
Vis mélangeur pour chariot mélangeur de fourrage

(30) Priorität: 09.03.2011 DE 202011003695 U
(43) Veröffentlichungstag der Anmeldung: 12.09.2012
(73) Patentinhaber: Mayer Verwaltungs GmbH & Co. KG, 84529 Tittmoning (DE)
(72) Erfinder: Mayer, Georg, 84529 Tittmoning (DE)
(74) Vertreter: Bauer, Friedrich

(56) Entgegenhaltungen:
- EP-A1- 0 003 813
- EP-A2- 1 559 474
- WO-A1-2007/083998
- US-A1- 2005 047 273
- US-A1- 2010 039 885

## Beschreibung

In der Landwirtschaft ist es z.B. aus US-A-2005047273 bekannt, zum Mischen von Futtermitteln wie Silage, Mais, Kraftfutter etc. Futtermischwagen zu verwenden, die mindestens eine um eine vertikale Drehachse drehbare Mischschnecke aufweisen. Derartige Mischschnecken können zur Verbesserung des Mischeffektes und zur Verbesserung des Austrags aus dem Mischbehälter einen Zusatzflügel aufweisen, der in Umfangsrichtung versetzt zur Anfangskante des Schneckengewindes in Bodennähe des Futtermischwagens angeordnet ist. Dieser Zusatzflügel ist üblicherweise mit der Schneckenwelle verschweißt und erstreckt sich von dieser radial nach außen.

Die optimale Form, Größe und Ausrichtung des Zusatzflügels hängt von der Art und vom Mischungsverhältnis der zu mischenden Futtermittelkomponenten ab. Es kann somit durchaus sein, dass ein Landwirt einen Futtermischwagen mit einer Mischschnecke erhält, die im Hinblick auf seine speziellen Anwendungsfälle nicht immer ein optimales Misch- und/oder Austragsverhalten hat. Weiterhin unterliegen die Zusatzflügel einem relativ hohen Verschleiß. Der Austausch eines derartigen Zusatzflügels ist jedoch nur mit relativ hohem Aufwand möglich, weil hierzu der Zusatzflügel von der Schneckenwelle abgeflext und ein neuer Zusatzflügel angeschweißt werden müsste.

Der Erfindung liegt die Aufgabe zu Grunde, eine Mischschnecke der eingangs genannten Art zu schaffen, die eine möglichst einfache, schnelle und kostengünstige Anpassung des Zusatzflügels an die Art des Futtermittels und an die Mischungszusammensetzung ermöglicht. Außerdem soll der Austausch verschlissener oder defekter Zusatzflügel erleichtert werden.

Diese Aufgabe wird erfindungsgemäß mit einer Mischschnecke gemäß den Merkmalen des Anspruches 1 gelöst. Vorteilhafte Ausführungsformen der Erfindung sind in den weiteren Ansprüchen beschrieben.

Bei der erfindungsgemäßen Mischschnecke umfasst der Zusatzflügel einen an der Schneckenwelle befestigten Mitnehmerstumpf und eine Flügelhülle, die lösbar am Mitnehmerstumpf befestigbar ist.

Mittels der Erfindung ist eine sehr einfache, schnelle und kostengünstige Anpassung des Zusatzflügels an die Art des zu mischenden Futtermittels und an die jeweilige Mischungszusammensetzung möglich. Dadurch, dass die Flügelhülle lösbar am Mitnehmerstumpf befestigbar ist, kann die Flügelhülle vom Mitnehmerstumpf abgenommen und durch eine solche ersetzt werden, die für den gewünschten Einsatz optimal geformt und dimensioniert ist. Je nach Anwendungsfall kann die Mischschnecke daher mit unterschiedlichen Zusatzflügeln ausgestattet werden. Insbesondere können Zusatzflügel gebildet werden, die einen unterschiedlichen Anstellwinkel zur Bodenplatte haben, bei denen die Anfangskanten und -schneiden des Zusatzflügels unterschiedliche Winkel und Schrägstellungen haben, die eine unterschiedliche Größe bzw. Fläche haben, und die aus verschiedenen Materialien bestehen.

Ein besonderer Vorteil für einen Hersteller liegt darin, dass nur unterschiedliche Flügelhüllen bevorratet werden müssen, während die übrigen Teile der Mischschnecke gleich bleiben und auf Vorrat hergestellt werden können. Hierdurch vereinfacht sich die Produktion und die Ersatzteilbevorratung.

Zweckmäßigerweise wird der Zusatzflügel, in Umfangsrichtung der Mischschnecke gesehen, in einem Winkel von 180° zum Schneckengewindeanfang, d. h. zur Gewindeanfangskante, angeordnet. Andere Winkel, insbesondere zwischen 120° und 220°, insbesondere zwischen 150° und 200°, sind jedoch ebenfalls möglich.

Gemäß einer vorteilhaften Ausführungsform weist die Flügelhülle einen zur Schneckenwelle hin offenen Einführraum zum Einführen des Mitnehmerstumpfes auf, wobei der Einführraum von einer Abdeckplatte überdeckt ist. Der Mitnehmerstumpf befindet sich damit geschützt innerhalb der Flügelhülle. Es ist jedoch nicht erforderlich, dass die Flügelhülle auch bodenseitig mittels einer Platte abgedeckt ist, was die Fertigung der Flügelhülle vereinfachen kann.

Gemäß einer vorteilhaften Ausführungsform weist die Flügelhülle Führungsstege auf, an denen der Mitnehmerstumpf formschlüssig anliegt. Durch eine derartige Ausgestaltung muss die Flügelhülle lediglich in ihrer Axialrichtung, d.h. in Radialrichtung der Mischschnecke, gegen ein Lösen vom Mitnehmerstumpf gesichert werden, während die wesentlich größeren Kräfte, die in bzw. gegen Umdrehungsrichtung wirken, durch die Formschlussverbindung zwischen Flügelhülle und Mitnehmerstumpf übertragen werden.

Gemäß einer vorteilhaften Ausführungsform ist der Einführraum der Flügelhülle an seinem zur Schneckenwelle entfernten Ende durch einen Befestigungssteg begrenzt, der am Mitnehmerstumpf mittels Schrauben befestigbar ist, die sich durch den Befestigungssteg hindurch erstrecken und in eine äußere Stirnseite des Mitnehmerstumpfes einschraubbar sind. Hierdurch ist eine sehr einfache, feste und sichere Montage der Flügelhülle möglich. Die Flügelhülle muss nur soweit auf den Mitnehmerstumpf aufgeschoben werden, bis dieser am Befestigungssteg anschlägt, worauf dann stirnseitig die Schrauben eingedreht werden können.

Vorteilhafterweise ist der Befestigungssteg im Vergleich zum radial außenliegenden Ende der Flügelhülle radial nach innen versetzt. Hierdurch können die Schraubenköpfe auf einfache Weise vor Verschleiß und Beschädigung geschützt werden.

Alternativ zu einer Schraubverbindung sind auch viele andere Arten möglich, wie die Flügelhülle am Mitnehmerstumpf befestigt werden kann. Beispielsweise ist es möglich, die Flügelhülle mittels eines Schnellverschlusses, beispielsweise eines Schnappverschlusses, am Mitnehmerstumpf festzuklemmen. Ein weiteres Beispiel besteht darin, durch fluchtende, quer zur Längsrichtung des Zusatzflügels eingebrachte Bohrungen einen Haltebolzen hindurch zu schieben und diesen zu sichern. Auch eine Verschraubung quer zur Längsrichtung des Zusatzflügels ist ohne weiteres möglich.

Gemäß einer vorteilhaften Ausführungsform weist die Flügelhülle eine integrierte Aufnahme für einen Magneten auf. Mittels eines derartigen Magneten können auf einfache Weise beim Mischen metallische Gegenständen aus dem Futtermittel entfernt werden. Die integrierte Aufnahme ermöglicht dabei eine besonders einfache Befestigung des Magneten am Zusatzflügel.

Auf der Flügelhülle kann mindestens ein nach oben und/oder radial nach außen vorstehendes Auswurfshilfselement angeordnet sein, das die Auswurfeigenschaften nochmals verbessert. Weiterhin ist es auch möglich, dass die Flügelhülle einen Grundkörper und auf dem Grundkörper angeordnete Verschleißbleche umfasst, die bei Bedarf einfach ausgetauscht werden können und den Grundkörper vor Verschleiß schützen.

Die Erfindung wird nachfolgend anhand der Zeichnungen beispielhaft näher erläutert. Es zeigen:
- Figur 1:: eine erfindungsgemäße Mischschnecke mit Zusatzflügel,
- Figur 2:: eine Darstellung der Mischschnecke von Figur 1, wobei die Flügelhülle getrennt vom Mitnehmerstumpf dargestellt ist,
- Figur 3:: eine Darstellung entsprechend Figur 2, jedoch schräg von unten,
- Figur 4:: einen Randabschnitt der Mischschnecke mit montiertem Zusatzflügel und daran angebrachtem Magneten,
- Figur 5:: eine Einzeldarstellung der Flügelhülle schräg von oben,
- Figur 6:: die Flügelhülle von Figur 5 schräg von unten, und
- Figur 7:: eine stirnseitige Ansicht der Flügelhülle.

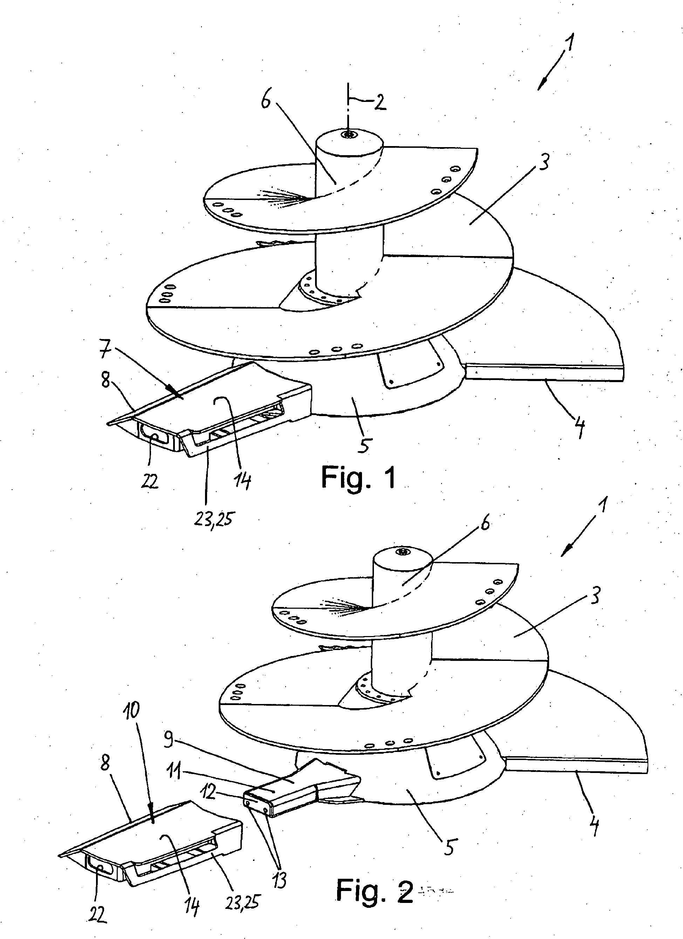

Aus den Figuren 1 bis 4 ist eine Mischschnecke 1 für einen nicht dargestellten Futtermischwagen ersichtlich. Die Mischschnecke 1 ist um eine vertikale Drehachse 2 drehbar und weist demgemäß eine vertikale anordenbare Schneckenwelle 6 auf, um die sich ein Schneckengewinde 3 spiralförmig herum erstreckt. Das Schneckengewinde 3 beginnt am unteren Ende der Mischschnecke 1 mit einer Gewindeanfangskante 4, die sich von einem Schneckenkonus 5 geradlinig radial nach außen erstreckt.

Der Schneckenkonus 5 ist Teil der Schneckenwelle 6. Die Schneckenwelle 6 ist mir ihrem Schneckenkonus 5 am Boden des Futtermischwagens drehbar gelagert und wird über nicht dargestellte Antriebsmittel in Umdrehung versetzt.

Das Schneckengewinde 3 windet sich um den Schneckenkonus 5 und um den nach oben anschließenden, zylindrischen Teil der Schneckenwelle 6 herum in mehreren Windungen nach oben. Der Außendurchmesser des Schneckengewindes 3 nimmt dabei kontinuierlich von unten nach oben ab.

Die Mischschnecke 1 ist üblicherweise in einem oben offenen Mischbehälter des Futtermischwagens angeordnet, der damit von oben her mit dem Futtermittel befüllbar ist. Der maximale Außendurchmesser des Schneckengewindes 3, d. h. der Außendurchmesser im Bereich der Gewindeanfangskante 4, überstreicht dabei zumindest den größten Teil der Bodenfläche des Mischbehälters, so dass dort keine ungemischten Futtermittelmengen liegen bleiben können.

Der Mischbehälter weist darüber hinaus in bekannter Weise eine seitliche Austragsöffnung auf, die sich in der Seitenwand des Mischbehälters befindet und sich vom Mischbehälterboden nach oben erstreckt. Zum Ausbringen des Futtermittels wird die Mischschnecke 1 in Umdrehung versetzt und die Austragsöffnung geöffnet. Das durch die Austragsöffnung hindurch tretende Futtermittel kann beispielsweise mittels eines am Futtermischwagen vorgesehenen Querförderbandes zur Futterstelle hin ausgetragen werden.

Zur Verbesserung des Mischeffektes und zur Verbesserung des Austrags weist die Mischschnecke 1 weiterhin einen Zusatzflügel 7 auf, der im gezeigten Ausführungsbeispiel im unteren Randbereich des Schneckenkonus 5 befestigt ist und damit zum Boden des Mischbehälters nur einen geringen Abstand hat. Weiterhin ist der Zusatzflügel 7 derart angeordnet, dass sich die Flügelanfangskante 8, in Umdrehungsrichtung gesehen, mit einem Vorlaufwinkel von etwa 150° vor der Gewindeanfangskante 4 befindet. Andere Vorlaufwinkel, insbesondere zwischen 120° und 200°, sind ohne weiteres möglich.

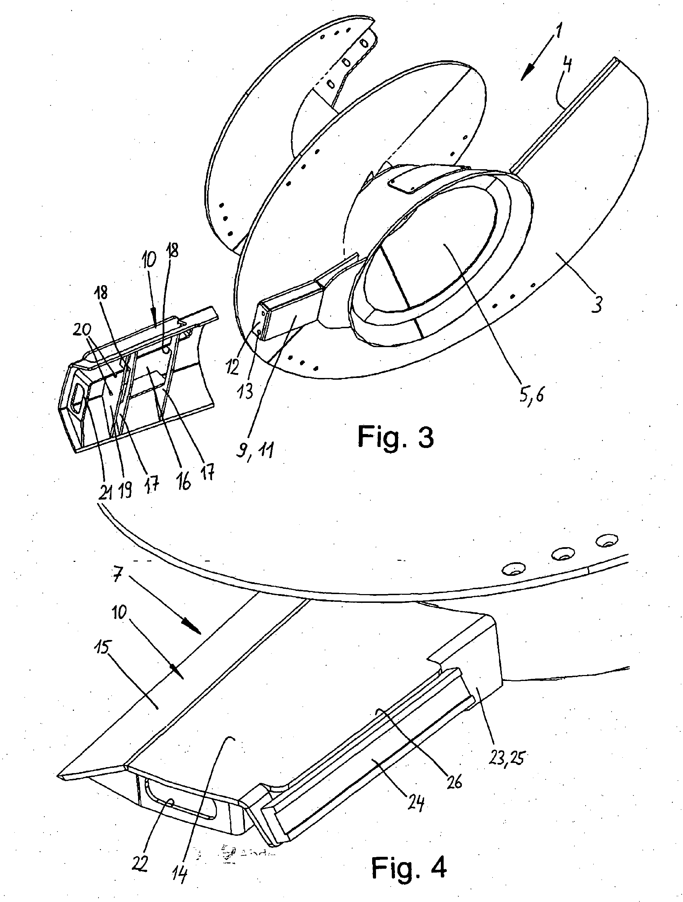

Wie aus den Figuren 2 und 3 ersichtlich, besteht der Zusatzflügel im Wesentlichen aus einem an der Schneckenwelle 6 im Bereich des Schneckenkonus 5 befestigten Mitnehmerstumpf 9 und einer Flügelhülle 10, die lösbar am Mitnehmerstumpf 9 befestigbar ist.

Der Mitnehmerstumpf 9 ist an seiner radial inneren Stirnseite fest mit dem Schneckenkonus 5 verbunden, insbesondere an diesem festgeschweißt. Der radial außen liegende Abschnitt 11 des Mitnehmerstumpfes 9 ist als stabiler, quaderförmiger Hohlkörper geformt, der stirnseitig durch eine Stirnplatte 12 verschlossen ist. In der Stirnplatte 12 befinden sich Gewindebohrungen 13.

Die Flügelhülle 10 ist derart ausgebildet, dass sie auf den Mitnehmerstumpf 9 aufgesteckt und an diesem befestigt werden kann. Die Flügelhülle 10 weist eine obere, zumindest im wesentlichen horizontal angeordnete Abdeckplatte 14 auf, an deren vorderem Ende sich eine schräg zur Horizontalebene verlaufende Flügelschneide 15 anschließt. Der vordere Rand der Flügelschneide 15 bildet die Flügelanfangskante 8. Mittels der Flügelschneide 15 und der Abdeckplatte 14 ist die Flügelhülle 10 und damit der Zusatzflügel 7 vollflächig nach oben abgedeckt. Auf seiner Unterseite, d.h. zum Boden des Mischbehälters, muss die Flügelhülle 10 dagegen keine Abdeckung aufweisen und kann, wie aus Figur 3 ersichtlich, nach unten hin offen sein.

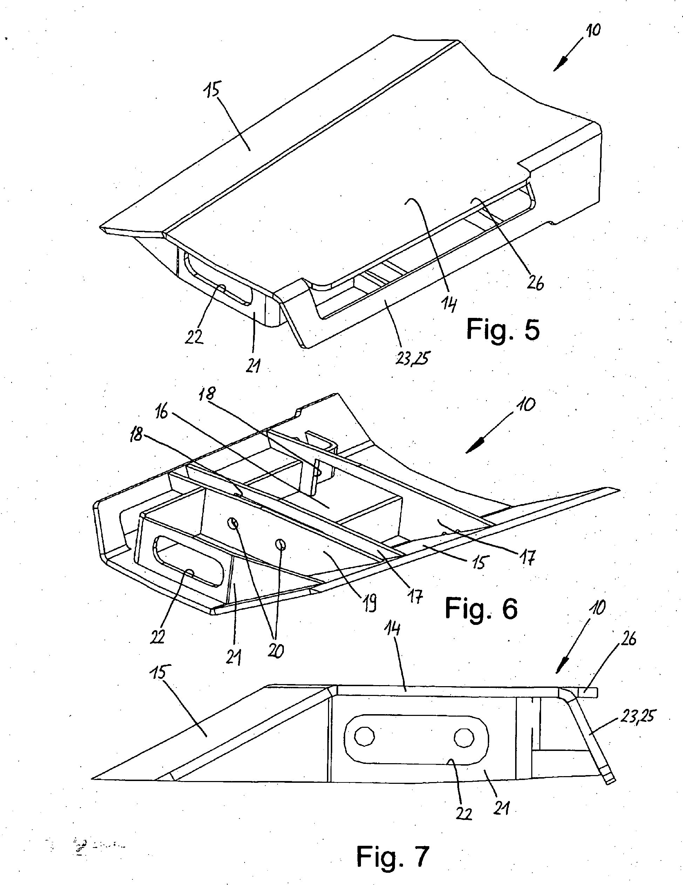

Um die Flügelhülle 10 auf den Mitnehmerstumpf 9 aufstecken zu können, weist die Flügelhülle 10 einen zum Schneckenkonus 5 hin offenen Einführraum 16 auf (Figuren 3 und 6). Eine formschlüssige Führung der Flügelhülle 10 erfolgt über zwei quer zur Axialrichtung der Flügelhülle 10, d. h. quer zur Einschubrichtung, angeordnete Führungsstege 17, die fluchtende Einführöffnungen 18 aufweisen. Diese Einführöffnungen 18 haben eine Breite und Höhe, die derart bemessen sind, dass die Flügelhülle 10 mit relativ geringem Spiel und passgenau auf den Mitnehmerstumpf 9 aufgesteckt werden kann.

Der Einführraum 16 wird in axialer Richtung durch einen quer verlaufenden Befestigungssteg 19 begrenzt, der quer zu den Führungsstegen 17 verläuft. Die Flügelhülle 10 kann somit soweit auf den Mitnehmerstumpf 9 aufgeschoben werden, bis die Stirnplatte 12 des Mitnehmerstumpfs 9 am Befestigungssteg 19 anschlägt. Im Befestigungssteg 19 sind Durchgangsbohrungen 20 eingebracht, die mit den Gewindebohrungen 13 des Mitnehmerstumpfes 9 fluchten. Durch die Durchgangsbohrungen 20 hindurch können somit Schrauben in die Gewindebohrungen 13 des Mitnehmerstumpfes 9 eingeschraubt werden, wodurch die Flügelhülle 10 axial am Mitnehmerstumpf 9 befestigt werden kann.

Wie aus den Figuren 3 und 6 ersichtlich, befindet sich der Befestigungssteg 19, in Radialrichtung der Mischschnecke 1 bzw. in Aufschieberichtung gesehen, weiter innen als das radial äußere Ende der Flügelhülle 10. Die Flügelhülle 10 erstreckt sich somit über den Mitnehmerstumpf 9 radial nach außen. Um auch in diesem nach außen überstehenden Bereich eine sehr stabile Anordnung zu erhalten, weist die Flügelhülle 10 einen weit außen liegenden, zum Befestigungssteg 19 angeordneten Verstärkungssteg 21 auf. Eine Langlochaussparung 22 im Verstärkungssteg 21 dient zum Hindurchführen der Schrauben, die in die Durchgangsbohrungen 20 und Gewindebohrungen 13 eingeführt werden.

Die Flügelhülle 10 weist ferner eine integrierte Aufnahme 23 (Figur 5) für einen Magneten 24 (Figur 4) auf. Diese Aufnahme 23 befindet sich an der, in Umdrehungsrichtung gesehenen, hinteren Seite des Zusatzflügels 7 und wird durch einen nach unten abgekanteten Endbereich 25 des Zusatzflügels 7 gebildet, der sich von der Abdeckplatte 14 schräg nach unten erstreckt. Eine rückseitige Verlängerung 26 der Abdeckplatte 14 erstreckt sich nach hinten zumindest teilweise über den hinteren Endbereich 25 hinaus, so dass der am hinteren Endbereich 25 befestigte Magnet 24 zumindest überwiegend durch die rückseitige Verlängerung 26 nach oben abgedeckt ist. Hierdurch wird der Magnet 24 beim Einfüllen des Futtermittels vor herabfallendem Futtermittel geschützt.

Zweckmäßigerweise besteht die Flügelhülle 10 aus einer Blech-Schweißkonstruktion. Flügelschneide 15, Abdeckplatte 14 und hinterer Endbereich 25 können hierbei beispielsweise aus einem einstückigen Blech bestehen, das an seiner Vorder- und Rückseite entsprechend abgekantet wird. In diesem Fall bestehen die Stege 17, 19, 21 zweckmäßigerweise aus eingeschweißten, stabilen Stahlblechen. Es ist jedoch auch denkbar, die Flügelhülle 10 in anderer Weise, beispielsweise als Gussteil, auszubilden. Weiterhin ist es auch denkbar, an der Schneckenwelle 6 mehrere Zusatzflügel 7 vorzusehen, die insbesondere in Drehrichtung versetzt zueinander angeordnet sind, jedoch auch in Axialrichtung der Schneckenwelle 6 versetzt angeordnet sein können.

## Patentansprüche

1. Mischschnecke für Futtermischwagen, umfassen:
- eine um eine vertikale Drehachse (2) drehbare Schneckenwelle (6),
- ein sich spiralförmig um die Schneckenwelle (6) herum erstreckendes Schneckengewinde (3), das an seinem bodenseitigen Anfangsabschnitt eine quer zur Drehrichtung angeordnete Gewindeanfangskante (4) aufweist, und
- mindestens einen Zusatzflügel (7), der in Drehrichtung versetzt zur Gewindeanfangskante (4) angeordnet ist und sich von der Schneckenwelle (6) radial nach außen erstreckt,
**dadurch gekennzeichnet, dass** der Zusatzflügel (7) einen an der Schneckenwelle (6) befestigten Mitnehmerstumpf (9) und eine Flügelhülle (10) umfasst, die lösbar am Mitnehmerstumpf (9) befestigbar ist.

2. Mischschnecke nach Anspruch 1, **dadurch gekennzeichnet, dass** die Flügelhülle (10) einen zur Schneckenwelle (6) hin offenen Einführraum (16) zum Einführen des Mitnehmerstumpfes (9) aufweist, wobei der Einführraum (16) von einer Abdeckplatte (14) überdeckt ist.

3. Mischschnecke nach Anspruch 1 oder 2, **dadurch gekennzeichnet, dass** die Flügelhülle (10) Führungsstege (17) aufweist, an denen der Mitnehmerstumpf (9) formschlüssig anliegt.

4. Mischschnecke nach Anspruch 2 oder 3, **dadurch gekennzeichnet, dass** der Einführraum (16) der Flügelhülle (10) an seinem zur Schneckenwelle (6) entfernten Ende durch einen Befestigungssteg (19) begrenzt ist, der am Mitnehmerstumpf (9) mittels Schrauben befestigbar ist, die sich durch den Befestigungssteg (19) hindurch erstrecken und in einer äußere Stirnplatte (12) des Mitnehmerstumpfes (9) einschraubbar sind.

5. Mischschnecke nach Anspruch 4, **dadurch gekennzeichnet, dass** der Befestigungssteg (19) im Vergleich zum radial außen liegenden Ende der Flügelhülle (10) radial nach innen versetzt ist.

6. Mischschnecke nach Anspruch 1 oder 2, **dadurch gekennzeichnet, dass** die Flügelhülle (10) mittels eines Schnellverschlusses am Mitnehmerstumpf (9) festklemmbar ist.

7. Mischschnecke nach einem der vorhergehenden Ansprüche, **dadurch gekennzeichnet, dass** die Flügelhülle (10) eine integrierte Aufnahme (23) für einen Magneten (24) aufweist.

8. Mischschnecke nach Anspruch 7, **dadurch gekennzeichnet, dass** die Aufnahme (23) für den Magneten (24) durch den in Umdrehungsrichtung gesehen rückseitigen Endbereich (25) der Flügelhülle (10) gebildet wird.

9. Mischschnecke nach Anspruch 7 oder 8, **dadurch gekennzeichnet, dass** der Magnet (24) zumindest überwiegend durch eine rückseitige Verlängerung (26) der Abdeckplatte (14) überdeckt ist.

10. Mischschnecke nach einem der vorhergehenden Ansprüche, **dadurch gekennzeichnet, dass** an der Flügelhülle (10) mindestens ein nach oben und/oder radial nach außen vorstehendes Auswurfhilfselement angeordnet ist.

11. Mischschnecke nach einem der vorhergehenden Ansprüche, **dadurch gekennzeichnet, dass** die Flügelhülle (10) einen Grundkörper und auf dem Grundkörper angeordnete Verschleißbleche umfasst.

## Claims

1. Mixing screw for a feed-mixing vehicle, comprising:
- a worm shaft (6) which can be rotated about a vertical axis of rotation (2),
- a worm thread (3) which extends in a spiral shape about the worm shaft (6) and comprises on an initial portion at the bottom end thereof an initial thread edge (4) which is arranged transversely to the direction of rotation, and
- at least one auxiliary blade (7) which is arranged so as to be offset from the initial thread edge (4) in the direction of rotation and extends radially outwards from the worm shaft (6),
**characterised in that** the auxiliary blade (7) comprises a carrier stump (9) fixed to the worm shaft (6) and a blade sleeve (10) which can be detachably fixed to the carrier stump (9).

2. Mixing screw according to claim 1, **characterised in that** the blade sleeve (10) comprises an insertion space (16) which is open towards the worm shaft (6) for inserting the carrier stump (9), the insertion space (16) being covered by a cover plate (14).

3. Mixing screw according to either claim 1 or claim 2, **characterised in that** the blade sleeve (10) comprises guide webs (17) onto which the carrier stump (9) fits in an interlocking manner.

4. Mixing screw according to either claim 2 or claim 3, **characterised in that** the insertion space (16) of the blade sleeve (10), at the end thereof which is remote from the worm shaft (6), is delimited by a fixing web (19) which can be fixed to the carrier stump (9) by means of screws which extend through the fixing web (19) and can be screwed into an outer end-plate (12) of the carrier stump (9).

5. Mixing screw according to claim 4, **characterised in that** the fixing web (19) is radially inwardly offset compared with the radially outwardly positioned end of the blade sleeve (10).

6. Mixing screw according to either claim 1 or claim 2, **characterised in that** the blade sleeve (10) can be clamped to the carrier stump (9) by means of a quick-release fastener.

7. Mixing screw according to any of the preceding claims, **characterised in that** the blade sleeve (10) comprises an integrated receiving portion (23) for a magnet (24).

8. Mixing screw according to claim 7, **characterised in that** the receiving portion (23) for the magnet (24) is formed by the rear end region (25), viewed in the direction of revolution, of the blade sleeve (10).

9. Mixing screw according to either claim 7 or claim 8, **characterised in that** the magnet (24) is covered, at least predominantly, by a rear extension (26) of the cover plate (14).

10. Mixing screw according to any of the preceding claims, **characterised in that** at least one upwardly and/or radially outwardly projecting ejection-aid element is arranged on the blade sleeve (10).

11. Mixing screw according to any of the preceding claims, **characterised in that** the blade sleeve (10) comprises a base body and wear plates arranged on said base body.

## Revendications

1. Vis mélangeuse pour chariot mélangeur de fourrage, comprenant :
- un arbre de vis (6) capable de rotation autour d'un axe de rotation vertical (2),
- un filet de vis (3) qui s'étend en forme de spirale tout autour de l'arbre de vis (6) et qui comporte au niveau de son tronçon initial du côté du sol une arête de départ de vis (4) agencée perpendiculairement à la direction de rotation, et
- au moins une pale additionnelle (7), qui est agencée en décalage par rapport à l'arête de départ de vis (4) en direction de rotation, et qui s'étend radialement vers l'extérieur depuis l'arbre de vis (6), **caractérisée en ce que** la pale additionnelle (7) inclut un moignon d'entraînement (7) fixé sur l'arbre de vis (6) et une enveloppe de pale (10) qui peut être fixée de façon détachable sur le moignon d'entraînement (9).

2. Vis mélangeuse selon la revendication 1, **caractérisée en ce que** l'enveloppe de pale (10) comporte un espace d'introduction (16) ouvert en direction de l'arbre de vis (6) pour l'introduction du moignon d'entraînement (9), ledit espace d'introduction (16) étant recouvert par une plaque de couverture (14).

3. Vis mélangeuse selon la revendication 1 ou 2, **caractérisée en ce que** l'enveloppe de pale (10) comporte des barrettes de guidage (17) contre lesquelles le moignon d'entraînement (9) s'applique en coopération de formes.

4. Vis mélangeuse selon la revendication 2 ou 3, **caractérisée en ce que** l'espace d'introduction (16) de l'enveloppe de pale (10) est limité, sur son côté éloigné de l'arbre de vis (6), par une barrette de fixation (19) qui peut être fixée sur le moignon d'entraînement (9) au moyen de vis qui s'étendent à travers la barrette de fixation (19) et qui peuvent être vissées dans une plaque frontale extérieure (12) du moignon d'entraînement (9).

5. Vis mélangeuse selon la revendication 4, **caractérisée en ce que** la barrette de fixation (19) est décalée radialement vers l'intérieur par comparaison à l'extrémité de l'enveloppe de pale (10) située radialement à l'extérieur.

6. Vis mélangeuse selon la revendication 1 ou 2, **caractérisée en ce que** l'enveloppe de pale (10) est susceptible d'être immobilisée par coincement sur le moignon d'entraînement (9) au moyen d'une fermeture rapide.

7. Vis mélangeuse selon l'une des revendications précédentes, **caractérisée en ce que** l'enveloppe de pale (10) comporte un logement intégré (23) pour un aimant (24).

8. Vis mélangeuse selon la revendication 7, **caractérisée en ce que** le logement (23) pour l'aimant (24) est formé à travers la zone terminale postérieure (25), vue dans la direction de rotation, de l'enveloppe de pale (10).

9. Vis mélangeuse selon la revendication 7 ou 8, **caractérisée en ce que** l'aimant (24) est recouvert au moins en majeure partie par un prolongement postérieur (26) de la plaque de couverture (14).

10. Vis mélangeuse selon l'une des revendications précédentes, **caractérisée en ce qu'**au moins un élément accessoire d'éjection en dépassement vers le haut et/ou radialement vers l'extérieur est agencé sur l'enveloppe de pale (10).

11. Vis mélangeuse selon l'une des revendications précédentes, **caractérisée en ce que** l'enveloppe de pale (10) comprend un corps de base et des tôles d'usure agencées sur le corps de base.
